# EUROPÄISCHE PATENTANMELDUNG

(11) **EP 3 106 269 A1**
(43) Veröffentlichungstag der Anmeldung: **21.12.2016**
(21) Anmeldenummer: 16173175.7
(22) Anmeldetag: 06.06.2016
(51) Int. Cl.: B25J 15/00

(54) **VORRICHTUNG UND VERFAHREN ZUM EIN- ODER DOPPELSEITIGEN GREIFEN VON BAUTEILEN ZUR KOMBINATION VON BAUTEILBEHANDLUNGEN**

(30) Priorität: 17.06.2015 DE 202015103185 U
(71) Anmelder: EDAG Production Solutions GmbH & Co. KG, 36039 Fulda (DE)
(72) Erfinder: Schaafhausen, Wilfried, 88045 Friedrichshafen (DE); Motzkau, Günter, 88045 Friedrichshafen (DE)
(74) Vertreter: Schuhbießer, Irmgard Gertrud

(57) **Zusammenfassung**

Es sind eine Vorrichtung (20; 200) und ein Verfahren zum ein- oder doppelseitigen positionierten Aufnehmen von Bauteilen (4) zur Kombination von Bauteilbehandlungen bereitgestellt. Die Vorrichtung (20; 200) hat ein Koppelelement (23) zur Kopplung der Vorrichtung (20; 200) mit einer Bewegungsvorrichtung (10), um die Vorrichtung (20; 200) mit der Bewegungsvorrichtung (10) im Raum zu bewegen, einen starren Rahmen (24) zur Aufnahme einer Behandlungseinrichtung (21, 22) zur Behandlung des Bauteils (4), und einen beweglichen Rahmen (25) zur Aufnahme des Koppelelements (23), wobei der bewegliche Rahmen (25) relativ zum starren Rahmen (24) bewegbar ausgestaltet ist, um eine über das Koppelelement (23) und den beweglichen Rahmen (25) vermittelte Bewegung der Bewegungsvorrichtung (10) in eine mit der Behandlungseinrichtung (21, 22) ausgeführte Bewegung zur Behandlung des Bauteils (4) umzusetzen.

## Beschreibung

Die vorliegende Erfindung bezieht sich auf eine Vorrichtung und Verfahren zum ein- oder doppelseitigen Greifen von Bauteilen zur Kombination von Bauteilbehandlungen. Insbesondere bezieht sich die vorliegende Erfindung auf eine Vorrichtung, die sowohl zur Verwendung beim Handhaben eines Bauteils als Last als auch zur Kombination von Bauteilbehandlungen in einer Automatisierungsanlage zum Einsatz kommen kann. Die Automatisierungsanlage ist insbesondere eine Fertigungsstraße für ein Fahrzeug, oder einen sonstigen Gegenstand.

In Automatisierungsanlagen, wie Behandlungs- und/oder Produktionsanlagen oder Fertigungsstraßen für industriell gefertigte Gegenstände, insbesondere Kraftfahrzeuge, Mediengeräte, Möbel, usw., werden üblicherweise einzelne Bauteile des zu behandelnden oder zu fertigenden Gegenstands von einem Ort zum anderen bewegt und/oder das Bauteil um seine Achse geschwenkt und/oder für eine bestimmte Behandlungsweise in einer speziellen Position gehalten, usw. Hierzu wird derzeit im Stand der Technik ein Greifwerkzeug verwendet, das sowohl die Last des Gegenstands handhaben kann als auch ausreichend dimensioniert ist, um den Gegenstand sicher und ausreichend schnell von einer Ausgangsposition in eine gewünschte andere Position zu bewegen und ihn an dieser Position auch zu halten und/oder zu positionieren und/oder in definierter Anordnung bereitzustellen.

Die derzeit in solchen Automatisierungsanlagen verwendeten Greifwerkzeuge sind vergleichsweise schwer. Dadurch ist wiederum eine Anlage, in die das Greifwerkzeug integriert ist, für eine große Handhabungslast auszulegen. Als weitere Folge davon ist die benötigte Antriebskraft zum Antrieb eines solchen Greifwerkzeugs relativ hoch. Ein weiterer Nachteil besteht darin, dass eine Umrüstung der Automatisierungsanlage zwischen verschiedenen Greifwerkzeugen, die jeweils für spezielle Greifaufgaben gestaltet sind, relativ zeitaufwändig ist. Dies führt zu langen Stillstandzeiten der Produktionsanlage.

EP 2 465 651 A1 zeigt eine Vorrichtung zur Aufnahme und Handhabung eines Bauteils und ein Verfahren zum Herstellen einer solchen Vorrichtung. Hier ist das Gewicht der Vorrichtung durch Ausführung als Leichtbauwerkstoffblock um ca. 20 bis 50 % gegenüber den bisher bekannten Greifwerkzeugen deutlich reduziert.

Ein weiteres Problem besteht jedoch darin, dass bei der Montage von Fahrzeugen in einer Fahrzeugfertigungslinie möglichst viele verschiedene Typen eines Fahrzeugmodells, wie beispielsweise Kombi, Limousine, Cabrio, usw., je nach Bedarf direkt nacheinander und abwechselnd herstellbar sein sollen. Hierfür sind für die verschiedenen Typen des Fahrzeugmodells zum einen unterschiedliche Teile, wie Dächer, Fahrertüren, Beifahrertüren, Hecktüren usw. und zum anderen unterschiedliche Bearbeitungsarten der Teile, wie Bördeln bzw. Rollfalzbearbeitung, Laserschweißen usw. erforderlich. Demzufolge muss an einer Station zur Montage der Fahrzeugdächer oder Fahrzeugtüren, wenn erst eine Limousine, dann ein Cabrio und direkt danach wieder eine Limousine des Fahrzeugmodells hergestellt werden soll, jeweils das Greifwerkzeug für die unterschiedlichen Teile des Fahrzeugmodells als auch das Bearbeitungswerkzeug umgerüstet werden. Dies erzwingt eine Vorhaltung der verschiedenen Greifwerkzeuge als auch der verschiedenen Bearbeitungswerkzeuge und eine dafür jeweils benötigte Umrüstzeit. Nachteilig daran ist, dass dadurch der Platzbedarf und die Taktzeiten der Fahrzeugfertigungslinie ansteigen.

Daher ist es Aufgabe der vorliegenden Erfindung, eine Vorrichtung und ein Verfahren zum ein- oder doppelseitigen Greifen von Bauteilen zur Kombination von Bauteilbehandlungen bereitzustellen, mit welchen die zuvor genannten Probleme gelöst werden können. Insbesondere soll eine Vorrichtung und ein Verfahren zur Kombination von Bauteilbehandlungen bereitgestellt werden, bei welcher die Vorrichtung im Vergleich zu herkömmlichen Vorrichtungen leichtgewichtig, sehr flexibel und schnell an geänderte Situationen im Fertigungsablauf anpassbar und kostengünstig herstellbar ist.

Diese Aufgabe wird durch eine Vorrichtung zum ein- oder doppelseitigen positionierten Aufnehmen von Bauteilen zur Kombination von Bauteilbehandlungen nach Anspruch 1 gelöst. Die Vorrichtung hat ein Koppelelement zur Kopplung der Vorrichtung mit einer Bewegungsvorrichtung, um die Vorrichtung mit der Bewegungsvorrichtung im Raum zu bewegen, einen starren Rahmen zur Aufnahme einer Behandlungseinrichtung zur Behandlung des Bauteils, und einen beweglichen Rahmen zur Aufnahme des Koppelelements, wobei der bewegliche Rahmen relativ zum starren Rahmen bewegbar ausgestaltet ist, um eine über das Koppelelement und den beweglichen Rahmen vermittelte Bewegung der Bewegungsvorrichtung in eine mit der Behandlungseinrichtung ausgeführte Bewegung zur Behandlung des Bauteils umzusetzen.

Der Begriff "positioniertes Aufnehmen" im Sinne dieser Beschreibung ist als positionieren und/oder in definierter Anordnung bereitstellen zu verstehen.

Die beschriebene Vorrichtung realisiert einen ein- oder doppelseitigen Bauteilgreifer, der, neben dem Greifen von Bauteilen an seinen beiden Seiten, für Laserschweiß- und Rollfalzbearbeitung für Fahrzeugbauteile sowie sämtliche Kombinationen daraus geeignet ist. Somit kann die Vorrichtung ein oder zwei Behandlungsfunktionen, insbesondere Fügefunktionen, des Bauteils, wie beispielsweise Rollfalzen an seiner einen Seite und Laserschweißen an seiner anderen Seite, vorteilhaft kombinieren. Ungeachtet dessen kann die Vorrichtung jedoch auch ein oder zwei Rollfalzgreifer oder ein oder zwei Laserschweißgreifer anstelle des einen Rollfalzgreifers und des einen Laserschweißgreifers aufweisen. Hierbei ist die Vorrichtung dennoch sehr leichtgewichtig. Dadurch ist die Vorrichtung sehr flexibel und ist schnell an geänderte Situationen im Fertigungsablauf anpassbar und kostengünstig herstellbar. Dadurch ist die Vorrichtung sowohl im Prototypenbau als auch in der Serienfertigung von Gegenständen auch bei sehr niedrigen Taktzeiten sehr gut geeignet. Dies ist ein großer Vorteil gegenüber dem Stand der Technik, bei welchem für den Prototypenbau und die Serienfertigung von Gegenständen verschiedene Vorrichtungen erforderlich sind.

Die beschriebene Vorrichtung kombiniert als Behandlungen des Bauteils zumindest den Transport von Bauteil und/oder Werkzeug und zumindest eine Bearbeitung des Bauteils mit dem Werkzeug. Hierbei ist die Vorrichtung rein mechanisch aufgebaut, ohne dass eine Betätigung des Werkzeugs an der Vorrichtung durch eine aufwändige Betätigungseinrichtung, wie beispielsweise eine elektrische, pneumatische oder hydraulische Antriebseinrichtung, erforderlich wäre. Die Betätigung des Werkzeugs wird dagegen über die Bewegungsvorrichtung in Zusammenarbeit mit der speziellen Konstruktion der Vorrichtung bewerkstelligt.

"Behandeln" ist hierbei insbesondere zu verstehen als greifen; ansaugen; halten, insbesondere niederhalten; umsetzen; an einer bestimmten Stelle positionieren; bewegen, wie schwenken, drehen, schieben, heben, usw.; tragen, stützen, usw.; oder bearbeiten mit einem Werkzeug.

Noch dazu hat die Vorrichtung mit zwei daran aufgenommenen Bauteilen ein Gesamtgewicht von bis zu ca. 350 kg, so dass auch dieser Gesamtverbund von Vorrichtung und zwei Bauteilen auch von einer Bewegungsvorrichtung, wie einem Roboter, leicht händelbar ist. Dies ist gegenüber dem Stand der Technik ein großer Vorteil, bei welchem bisher bereits eine Vorrichtung mit nur einer Behandlungsmöglichkeit und einem aufgenommenen Bauteil ein Gewicht von ca. 350 kg hat. Somit kann die hier beschriebene Vorrichtung, zusätzlich zu ihren Bearbeitungsfunktionen der Bauteile, in Zusammenwirken mit der Bewegungsvorrichtung auch Bauteile greifen und tragen in einer positioniert aufgenommenen Art und Weise. Somit hat die die zuvor beschriebene Vorrichtung in Anbetracht der mit ihr realisierbaren Funktionen ein deutlich reduziertes Gewicht gegenüber einer herkömmlichen Vorrichtung, welche meist nur einen Teil der zuvor beschriebenen Funktionen ausführen kann.

Vorteilhafte weitere Ausgestaltungen der Vorrichtung sind in den abhängigen Ansprüchen angegeben.

Die zuvor beschriebene Vorrichtung kann Teil einer Automatisierungsanlage zur Behandlung eines Gegenstands sein, wobei die Automatisierungsanlage zudem eine Bewegungsvorrichtung zur Bewegung der Vorrichtung im Raum aufweist.

Die zuvor genannte Aufgabe wird zudem durch ein Verfahren zum ein- oder doppelseitigen positionierten Aufnehmen von Bauteilen zur Kombination von Bauteilbehandlungen nach Anspruch 14 gelöst.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Nachfolgend ist die Erfindung unter Bezugnahme auf die beiliegende Zeichnung und anhand von Ausführungsbeispielen näher beschrieben. Es zeigen:
Fig. 1 eine stark vereinfachte dreidimensionale Ansicht einer Automatisierungsanlage mit einer Vorrichtung gemäß einem ersten Ausführungsbeispiel;
Fig. 2 eine Teilansicht der Automatisierungsanlage gemäß dem ersten Ausführungsbeispiel;
Fig. 3 und Fig. 4 jeweils eine dreidimensionale Ansicht der Vorrichtung gemäß dem ersten Ausführungsbeispiel;
Fig. 5 eine dreidimensionale Ansicht eines starren Rahmens der Vorrichtung gemäß dem ersten Ausführungsbeispiel;
Fig. 6 eine dreidimensionale Ansicht eines beweglichen Rahmens der Vorrichtung gemäß dem ersten Ausführungsbeispiel;
Fig. 7, Fig. 8 und Fig. 9 ein Funktionsprinzip einer Bewegung des beweglichen Rahmens relativ zum starren Rahmen der Vorrichtung gemäß dem ersten Ausführungsbeispiel, um eine Behandlung eines Bauteils durchzuführen;
Fig. 10 und Fig. 11 jeweils in Teilansichten der Vorrichtung gemäß dem ersten Ausführungsbeispiel ein weiteres Funktionsprinzip einer Bewegung des beweglichen Rahmens relativ zum starren Rahmen der Vorrichtung, um eine Behandlung eines Bauteils durchzuführen; und
Fig. 12 und Fig. 13 schematische Zeichnungen zur weiteren Erläuterung des Funktionsprinzip der in

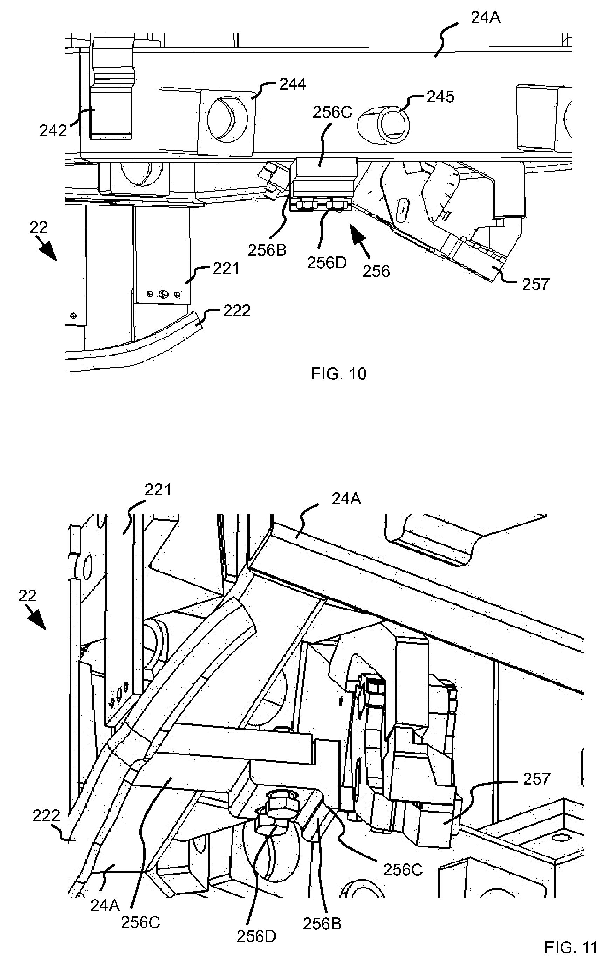

Fig. 10 und Fig. 11 gezeigten Elemente der Vorrichtung; und

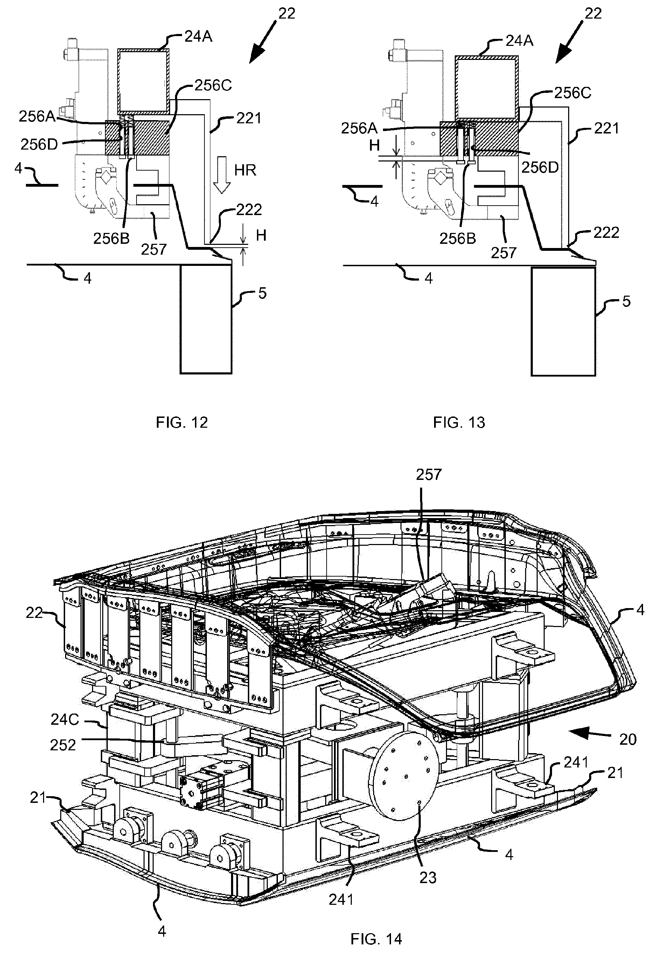

Fig. 14 eine dreidimensionale Ansicht der Vorrichtung gemäß dem ersten Ausführungsbeispiel, welche ein Bauteil 4 greift und trägt;

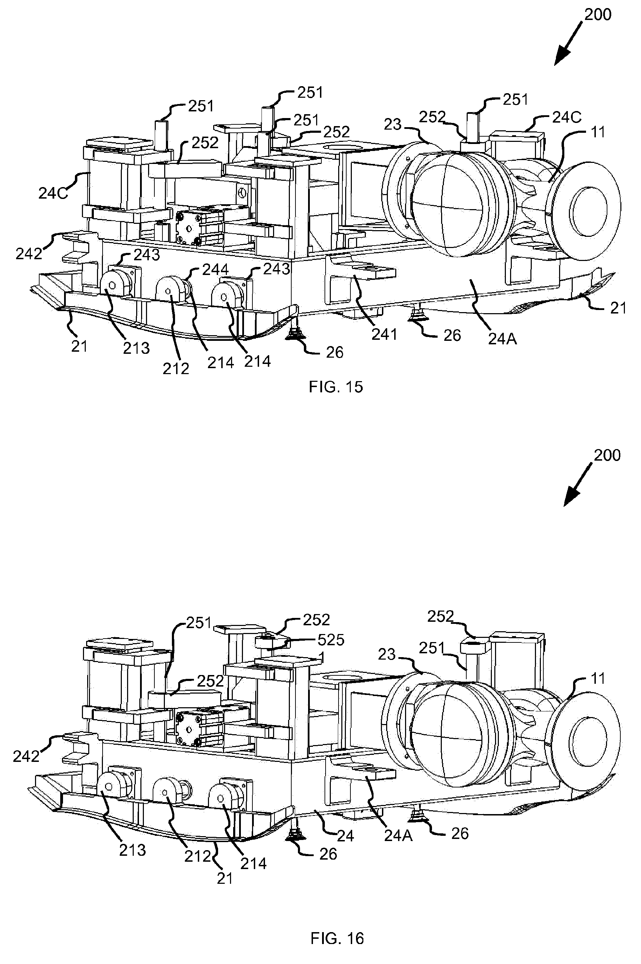

Fig. 15 und Fig. 16 jeweils eine dreidimensionale Ansicht einer Vorrichtung gemäß einem zweiten Ausführungsbeispiel.

In den Figuren sind gleiche oder funktionsgleiche Elemente, sofern nichts anderes angegeben ist, mit denselben Bezugszeichen versehen.

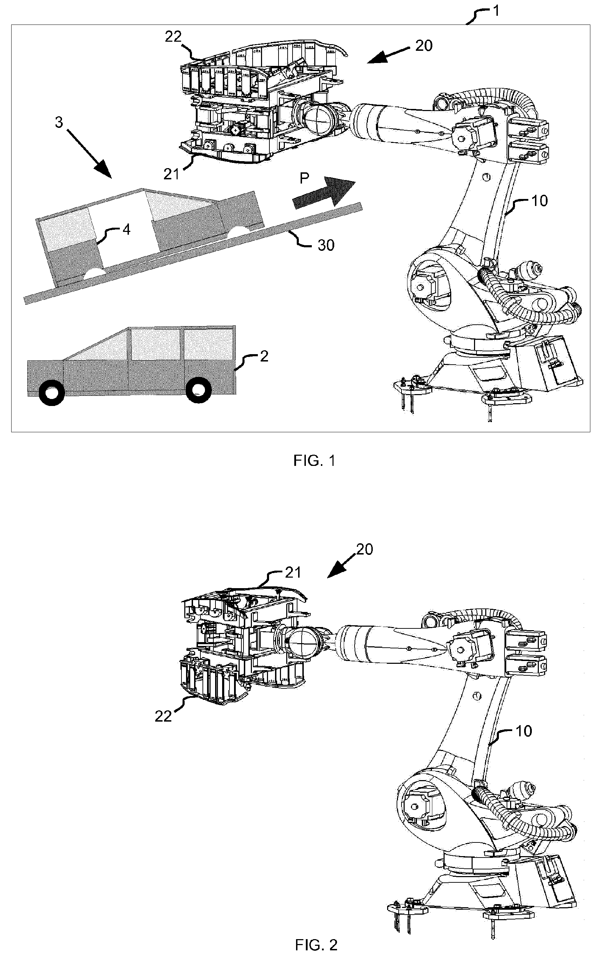

Fig. 1 zeigt eine Automatisierungsanlage 1 zur Produktion oder Fertigung eines Gegenstands 2 aus einem Teilgegenstand 3, der aus mehreren Bauteilen 4 zusammengebaut ist. In Fig. 1 ist der Gegenstand 2 ein Kraftfahrzeug und die Automatisierungsanlage 1 ist eine Fahrzeugfertigungslinie, in welcher Fahrzeuge aus Fahrzeuggrundkörpern als der Teilgegenstand 3 hergestellt werden bzw. zunächst die Fahrzeuggrundkörper 3 der Fahrzeuge als Gegenstand 2 aus einzelnen Bauteilen 4, wie Seitenteilen, Türinnenteil, Türaußenteil, Fügeverbund aus Türinnen- und Türaußenteil, Dach, Türen, Deckel, Klappen von Fahrzeugen, insbesondere Frontklappe, Heckklappe, usw., gefertigt bzw. hergestellt werden. Die Automatisierungsanlage 1 ist jedoch nicht darauf beschränkt und kann eine Automatisierungsanlage für einen beliebigen anderen industriell gefertigten Gegenstand 2, wie Möbel, usw., sein. Insbesondere kann das Fahrzeug auch ein Lastkraftfahrzeug, Flugzeug, Schiff usw. sein.

Die Automatisierungsanlage 1 in Fig. 1 hat mindestens eine Bewegungsvorrichtung 10, eine Vorrichtung 20 und eine Transportvorrichtung 30. An der Vorrichtung 20 sind in Richtung ihrer ersten Seite eine erste Behandlungseinrichtung 21 und in Richtung ihrer zweiten Seite eine zweite Behandlungseinrichtung 22 montiert. Die Bewegungsvorrichtung 10 dient zum Bewegen der Vorrichtung 20, mit welcher eines oder mehrere der Bauteile 4 und/oder Teilgegenstände 3 behandelt werden. In Fig. 1 ist die Bewegungsvorrichtung 10 ein Roboter. Alternativ kann die Bewegungsvorrichtung 10 jedoch auch eine beliebige andere Form und Ausgestaltung haben, wie beispielsweise ein Schwenkarm, eine Hebevorrichtung mit einem Teleskoparm usw.

Die Transportvorrichtung 30 transportiert die Fahrzeuggrundkörper als die Teilgegenstände 3 oder auch nur einzelne Bauteile 4 in Richtung des Pfeils P durch die Automatisierungsanlage 1. Die Transportvorrichtung 30 ist in Fig. 1 nur sehr vereinfacht und nur teilweise dargestellt.

In Fig. 1 ist die Vorrichtung 20 derart mit der Bewegungsvorrichtung 10 gehalten, dass die erste Behandlungseinrichtung 21 unten an der Vorrichtung 20 angeordnet ist, wohingegen die zweite Behandlungseinrichtung 22 oben an der Vorrichtung 20 angeordnet ist. In einer derartigen in Fig. 1 gezeigten Position der Vorrichtung 20 kann die Vorrichtung 20 bei der vorliegenden Automatisierungsanlage 1 ein Bauteil 4 mit ihrer ersten Behandlungseinrichtung 21 behandeln. Um bei der vorliegenden Automatisierungsanlage 1 ein Bauteil 4 auch mit der zweiten Behandlungseinrichtung 22 behandeln zu können, kann die Bewegungsvorrichtung 10 die Vorrichtung 20 in eine Stellung drehen, wie in Fig. 2 gezeigt.

In Fig. 2 hält die Bewegungsvorrichtung 10 die Vorrichtung 20 demzufolge derart, dass die erste Behandlungseinrichtung 21 oben an der Vorrichtung 20 angeordnet ist, wohingegen die zweite Behandlungseinrichtung 22 nun unten an der Vorrichtung 20 angeordnet ist.

Auch wenn dies in den Figuren nicht dargestellt ist, kann die Bewegungsvorrichtung 10 die Vorrichtung 20 selbstverständlich auch in alle anderen jeweils erforderlichen Positionen bzw. Stellungen drehen, bei welchen die Vorrichtung 20 eine Behandlung eines Bauteils 4 ausführen soll. Je nach Ausgestaltung der Automatisierungsanlage 1 kann die Bewegungsvorrichtung 10 die Vorrichtung 20 auch derart positionieren, dass zumindest teilweise gleichzeitig eine Behandlung von Bauteil(en) 4 mit den beiden Behandlungseinrichtungen 21, 22 möglich ist.

Somit können bei der zuvor beschriebenen Vorrichtung 20 zwei Behandlungseinrichtungen 21, 22, wie Werkzeuge, an unterschiedlichen Seiten der Vorrichtung 20 vorgesehen sein. Je nach Bedarf kann die Bewegungsvorrichtung 10 die Vorrichtung 20 so drehen, dass die derzeit benötigte erste oder zweite Behandlungseinrichtung 21, 22 dem Bauteil 4 zugewandt ist, so dass eine Bearbeitung des Bauteils 4 mit der ersten oder zweiten Behandlungseinrichtung 21, 22 möglich ist.

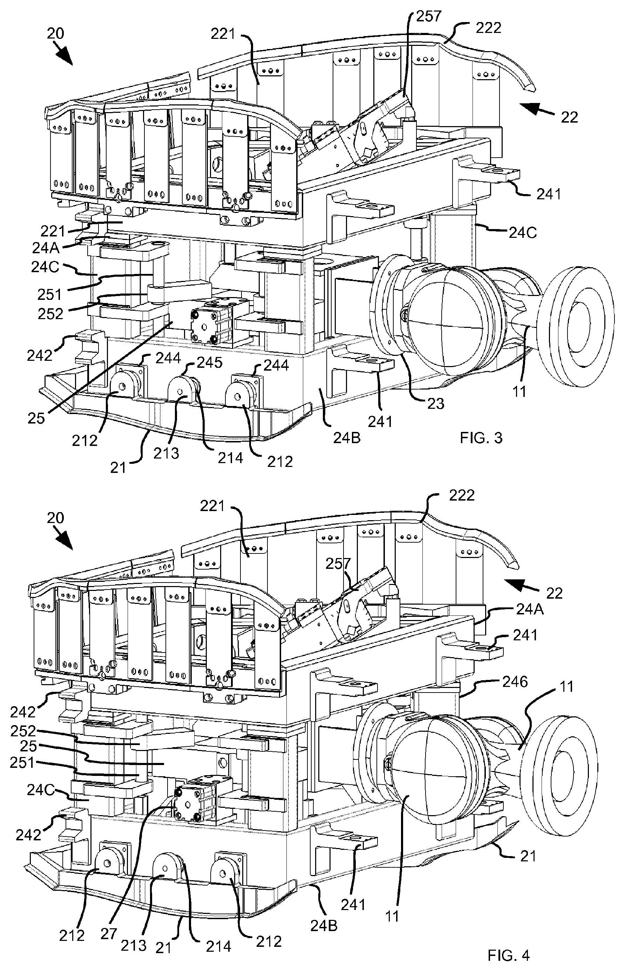

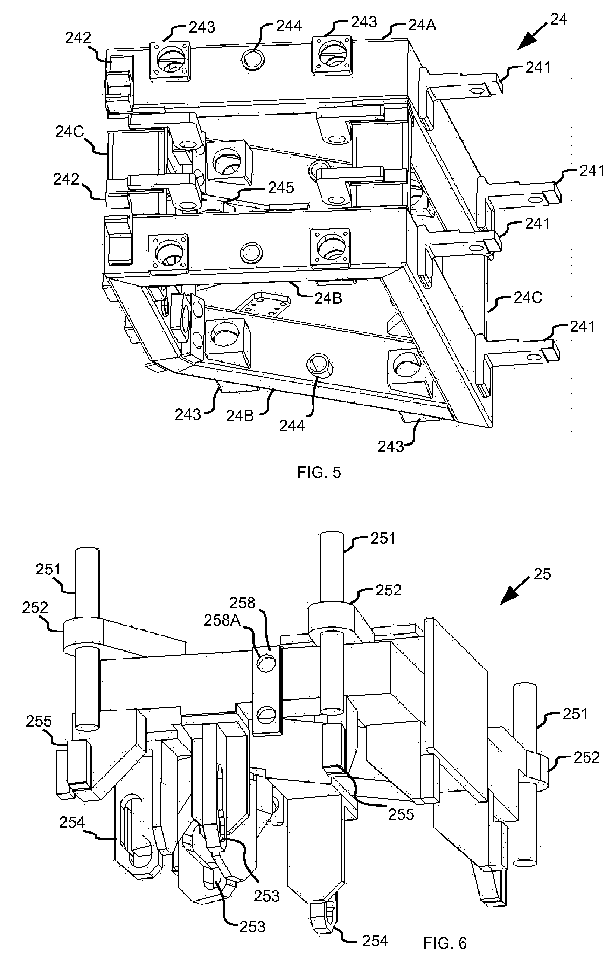

Fig. 3 und Fig. 4 zeigen die Vorrichtung 20 und deren Ankopplung mit ihrem Koppelelement 23 an ein Koppelelement 11 der Bewegungsvorrichtung 10 genauer. Die Vorrichtung 20 hat zudem einen starren Rahmen 24 (Fig. 5) mit einem ersten Rahmenmodul 24A und einem zweiten Rahmenmodul 24B, die auch als Ober- und Unterteil bezeichnet werden können und durch Rahmenmodulverbinder 24C verbunden sind. Zudem hat die Vorrichtung 20 einen beweglichen Rahmen 25 (Fig. 6), der relativ zum starren Rahmen 24 beweglich ist. Noch dazu sind an der Vorrichtung 20 Halteelemente 26 vorgesehen, mit welchen ein Bauteil 4, beispielsweise eine Fahrzeugtür, usw., aufgenommen und gehalten werden kann, wie beispielsweise in Fig. 14 gezeigt. Mit einem Befestigungszylinder 27, der beispielsweise ein Absteckzylinder ist, kann der starre Rahmen 24 am beweglichen Rahmen 25 abgesteckt bzw. verriegelt werden. Hierfür hat der bewegliche Rahmen 25 eine Befestigungsbuchse 258. Der Befestigungszylinder 27 und die Befestigungsbuchse 258 sind Verriegelungselemente 27, 258 der Vorrichtung 20.

Der starre Rahmen 24 ist in Fig. 5 separat dargestellt. In Fig. 5 ist die Befestigungsbuchse 258 (Fig. 6) mit zwei Öffnungen 258A dargestellt. Je nach Bedarf kann der Befestigungszylinder 27 den Rahmen 24 in eine der beiden Öffnungen 258A befestigen bzw. abstecken und dadurch verriegeln. Der Befestigungszylinder 27 und die Befestigungsbuchse 258 bilden ein Stecker/Steckdosesystem. Der bewegliche Rahmen 25 ist in Fig. 6 separat dargestellt.

Wie aus Fig. 3 bis Fig. 5 ersichtlich, sind an dem starren Rahmen 24 mehrere Positionierelemente 241 zur XY-Positionierung der Vorrichtung 20 an einer Maschine, wie beispielsweise an einem Falzbett 5 (Fig. 12 und Fig. 13) der Maschine, angeordnet. Zudem sind an dem starren Rahmen 24 mehrere Positionierelemente 242 zur Z-Positionierung der Vorrichtung 20 in der nicht dargestellten Maschine angeordnet. Der starre Rahmen 24 hat zudem Führungen 243 zum Führen der ersten oder zweiten Behandlungseinrichtung 21, 22 in dem starren Rahmen 24. Außerdem sind in dem starren Rahmen 24 zwischen den Führungen 243 jeweils Öffnungen 244 vorgesehen, durch welche Teile der ersten oder zweiten Behandlungseinrichtung 21, 22 steckbar sind, wie nachfolgend genauer beschrieben. Eine Führung 245 des starren Rahmens 24 ist zum Führen des beweglichen Rahmens 25 am starren Rahmen 24 vorgesehen, wenn der bewegliche Rahmen 25 relativ zum starren Rahmen 24 bewegt wird.

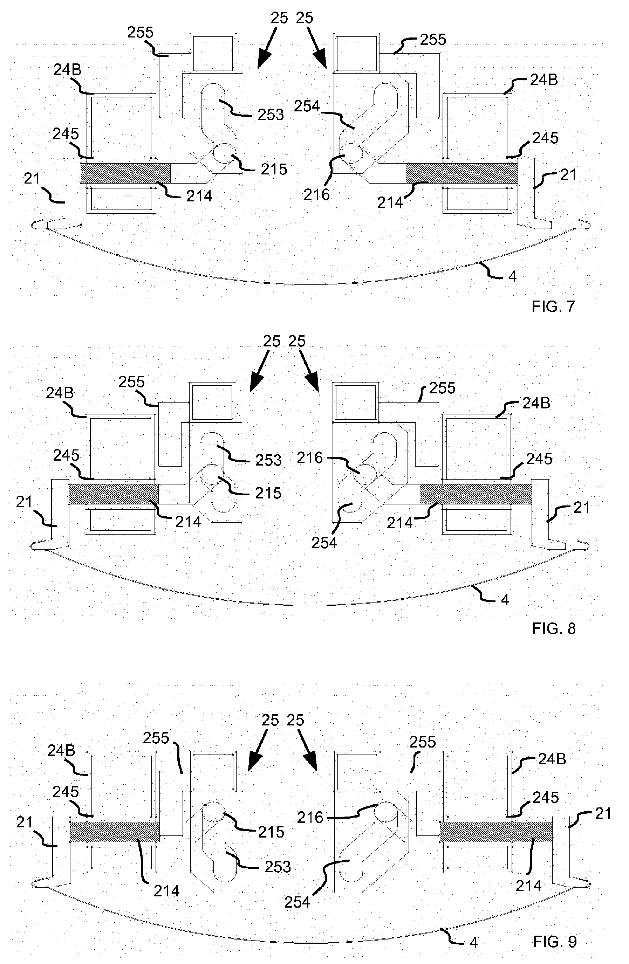

Wie aus Fig. 3, Fig. 4 und Fig. 6 ersichtlich, hat der bewegliche Rahmen 25 mehrere Führungssäulen 251 und Führungselemente 252 zum Führen des beweglichen Rahmens 25 mit Hilfe der Führungen 245 (Fig. 5) am und somit relativ zum starren Rahmen 24. Zudem hat der bewegliche Rahmen 25 in Fig. 6 mehrere Kulissenführungen 253, 254, welche zur Betätigung der ersten Behandlungseinrichtung 21 dienen. Die erste Behandlungseinrichtung 21 kann dann mit einer Verriegelungseinheit 255 in Arbeitsstellung verriegelt werden. Dies ist in Bezug auf Fig. 7 bis Fig. 10 genauer beschrieben. In Fig. 6 ist nur eine der Verriegelungseinheiten 255 für die Kulissenführungen 253, 254 sichtbar.

Gemäß Fig. 3 und Fig. 4 kann die erste Behandlungseinrichtung 21 mit Befestigungselementen 212 am starren Rahmen 24 lösbar befestigt werden. Außerdem ist die erste Behandlungseinrichtung 21 in Fig. 3 und Fig. 4 mit Befestigungselementen 213, 214 am beweglichen Rahmen 25 lösbar befestigt. Wie in Zusammenschau mit Fig. 7 ersichtlich, wird hierfür jeweils ein Befestigungselement 214 durch eine Öffnung 245 des starren Rahmens 24 gesteckt. Die erste Behandlungseinrichtung 21 ist als Füllschieber ausgestaltet, welcher zum Bördeln bzw. zur Rollfalzbearbeitung zum Einsatz kommen kann.

Außerdem ist in Fig. 3 und Fig. 4 die zweite Behandlungseinrichtung 22 mit Befestigungselementen 221 am starren Rahmen 24 lösbar befestigt. Hierbei können, wie für die erste Behandlungseinrichtung 21, die Führungen 243 (Fig. 5) des starren Rahmens 24 zum Befestigen der zweiten Behandlungseinrichtung 22 an dem starren Rahmen 24 verwendet werden. Für die Befestigung der zweiten Behandlungseinrichtung 22 am starren Rahmen 24 werden die Öffnungen 244 jedoch nicht benötigt. Die zweite Behandlungseinrichtung 22 ist als Niederhalter ausgestaltet, welcher beim Laserschweißen zum Einsatz kommen kann. Die zweite Behandlungseinrichtung 22 hat Bleche 222 und einen optionalen Verbinder 223, welcher die Bleche 222 verbindet. Die zweite Behandlungseinrichtung 22 kann ein oder mehrere Bauteil(e) 4 auf einer Unterlage, beispielsweise einem Falzbett, niederhalten, so dass das Bauteil 4 mittels Laserschweißen bearbeitet werden kann. Hierbei kann das Bauteil von einem Bauteilgreifer 257 gegriffen sein. Dies ist in Fig. 12 und Fig. 13 später noch detaillierter dargestellt. Die zweite Behandlungseinrichtung 22 dient also zum Behandeln eines oder mehrerer Bauteil(e) 4.

In Fig. 3 ist die erste Behandlungseinrichtung 21 aus der Vorrichtung 20 ausgefahren, wohingegen die erste Behandlungseinrichtung 21 in Fig. 4 in die Vorrichtung 20 eingefahren ist, wie an der jeweiligen Stellung der Führungssäulen 251 und Führungselemente 252 zueinander aus Fig. 3 und Fig. 4 ersichtlich. Somit zeigt Fig. 3 die Arbeitsstellung der ersten Behandlungseinrichtung 21, wohingegen Fig. 4 die Ruhestellung oder Nicht-Arbeitsstellung der ersten Behandlungseinrichtung 21 zeigt. Die Ruhestellung oder Nicht-Arbeitsstellung der Vorrichtung 20 entspricht auch einer Transportstellung der Vorrichtung 20, in welcher die Vorrichtung 20 mit oder ohne Bauteil 4 von der Bewegungsvorrichtung 10 im Raum, beispielsweise zur Ablage oder Aufnahme des Bauteils 4 bewegt wird.

Fig. 7 bis Fig. 9 verdeutlichen das Funktionsprinzip einer Behandlung eines Bauteils 4 mit der ersten Behandlungseinrichtung 21. Demzufolge ist die erste Behandlungseinrichtung 21 über ihr Befestigungselement 214, das in Form eines Stabs ausgeführt und durch die Öffnung 245 am starren Rahmenmodul 24B zum beweglichen Rahmen 25 geführt ist, mit den Kulissenführungen 253, 254 des beweglichen Rahmens 25 über Führungsbolzen 215, 216 verbunden. Die Führungsbolzen 215, 216 führen die erste Behandlungseinrichtung 21 in den Kulissenführungen 253,254.

Fig. 7 zeigt die erste Endstellung der ersten Behandlungseinrichtung 21, in welcher die erste Behandlungseinrichtung 21 in eingefahrener Stellung an der Vorrichtung 20 positioniert ist. In der ersten Endstellung sind die Führungsbolzen 215, 216 in den Kulissenführungen 253, 254 jeweils oben in Fig. 7 angeordnet. In dieser Stellung der ersten Behandlungseinrichtung 21 kann noch keine Behandlung des Bauteils 4 durchgeführt werden, weshalb diese Stellung auch als Ruhestellung oder Nicht-Arbeitsstellung bezeichnet wird. Um eine Behandlung des Bauteils 4 mit der ersten Behandlungseinrichtung 21 zu ermöglichen, muss die erste Behandlungseinrichtung 21 von ihrer in Fig. 7 gezeigten Stellung über die in Fig. 8 gezeigte Stellung in ihre zweite Endstellung gebracht werden, die in Fig. 9 gezeigt ist. Hierfür wird die Bewegungseinrichtung 10 auf das Bauteil 4 zu bewegt, so dass sich die erste Behandlungseinrichtung 21 geführt durch die Führungsbolzen 215, 216 in den Kulissenführungen 253, 254 in die in Fig. 9 gezeigte zweite Endstellung bewegt.

Somit werden die Führungsbolzen 215, 216 von der ersten Endstellung, also oben in den Kulissenführungen 253, 254, jeweils nach unten in Fig. 9 in den Kulissenführungen 253, 254 geführt und angeordnet. In der zweiten Endstellung kann dann das Bauteil 4 mit der ersten Behandlungseinrichtung 21 nach Verriegelung mit der Verriegelungseinheit 255 behandelt werden. Die Verriegelung mit der Verriegelungseinheit 255 ist hierbei mittels Formschluss ausgeführt, wie aus Fig. 9 ersichtlich, Die zweite Endstellung wird daher auch als Arbeitsstellung bezeichnet. Durch die Bewegung der Führungsbolzen 215, 216 in den Kulissenführungen 253, 254 bewegt sich die erste Behandlungseinrichtung 21 an den Rändern des Bauteils 4 in das Bauteil 4 hinein, wie in Fig. 7 bis Fig. 9 gezeigt.

Als Folge davon ist an der Vorrichtung 20 keine zusätzliche Antriebseinrichtung erforderlich, um die erste Behandlungseinrichtung 21 in die Arbeitsstellung zu bringen. Stattdessen hat die Vorrichtung 20 spezielle Mechaniken, welche von der Bewegungsvorrichtung 10 betätigt werden können. Die spezielle Mechaniken sind insbesondere der bewegliche Rahmen 25 in Zusammenwirken mit dem starren Rahmen 24 und die Kulissenführungen 253, 254 in Zusammenwirken mit der speziellen Ausgestaltung der Behandlungseinrichtung 21. Die Vorrichtung 20 hat allgemein gesagt einen Greif- Positioniermechanismus, da sowohl ein Greifen als auch Positionieren des Bauteils 4 mit der Vorrichtung 20 möglich ist.

Da die Bewegungsvorrichtung 10 zum Bewegen der Vorrichtung 20 im Raum bei der Automatisierungsanlage 1 sowieso vorhanden sein muss, kann die Funktion der Bewegungsvorrichtung 10 zusätzlich sinnvoll und sehr effektiv genutzt werden. Damit kann die Vorrichtung 20 deutlich leichter und weniger aufwändig ausgestaltet werden als es eine herkömmliche Vorrichtung ist, welche zusätzliche, in Herstellung und Betrieb teure, schwere und wartungsanfällige weitere Antriebseinrichtungen benötigen.

Zudem ist eine Klemmung des beweglichen Rahmens 25 an den Führungssäulen 251 möglich, um eine Verrutschsicherung des beweglichen Rahmens 25 relativ zum starren Rahmen 24 zu realisieren. Die Bewegungsvorrichtung 10 ermöglicht einen Toleranzausgleich bei der Behandlung des Bauteils 4, die in die Bahn der Kulissenführungen 253, 254 eingerechnet ist.

Während der mit der ersten Behandlungseinrichtung 21 durchgeführten Behandlung, insbesondere einem Fügeschritt beim Rollfalzen, kann die Vorrichtung 20 auf der gegenüberliegenden Seite, also an der zweiten Behandlungseinrichtung 22, neu bestückt werden und/oder das mit der zweiten Behandlungseinrichtung 22 behandelte Bauteil 4 entnommen werden.

Zudem wird die Bewegungsvorrichtung 10 zur Betätigung der zweiten Behandlungseinrichtung 22 verwendet, wie in Bezug auf Fig. 10 und Fig. 11 beschrieben.

In Fig. 10 und Fig. 11 sind federnd gelagerte Führungsbolzen 256 und ein Bauteilgreifer 257 gezeigt, die an dem beweglichen Rahmen 25 angeordnet sind und für eine schwerkraftbasierte Zustellung der zweiten Bauteilbehandlungseinrichtung 22 ausgestaltet sind. Da die zweite Behandlungseinrichtung 22 als Niederhalterzustellung ausgestaltet ist, kann das nachfolgend beschriebene Verfahren auch als Niederhalterzustellung bezeichnet werden.

Die Führungsbolzen 256 sind mit Druckstück 256A (Fig.12, Fig.13) und Auflage 256B ausgeführt. Das Druckstück 256A kann beispielsweise eine Feder sein. Zudem ist ein Befestigungsstück 256C der Führungsbolzen 256 mit entsprechenden Bohrungen versehen, die am starren Rahmen 24, genauer gesagt dem ersten Rahmenmodul 24A, befestigt sind. Die zweite Behandlungseinrichtung 22 ist als Niederhalter starr am starren Rahmenmodul 24A befestigt.

Die Führungsbolzen 256 lagern den beweglichen Rahmen 25 und das starre Rahmenmodul 24A schwimmend aneinander. Bewegt die Bewegungsvorrichtung 10 die Vorrichtung 20 auf das von dem Bauteilgreifer 257 gegriffene Bauteil 4 zu, kommt die zweite Behandlungseinrichtung 22 in Kontakt mit dem Bauteil 4. Dadurch kann die zweite Behandlungseinrichtung 22 das Bauteil 4 behandeln.

Dieses Prinzip ist in Fig. 12 und Fig. 13 noch genauer veranschaulicht. Demzufolge ist das Rahmenmodul 24A des starren Rahmens 24 fest mit der zweiten Behandlungseinrichtung 22 verbunden. Zudem ist das starre Rahmenmodul 24A über die Führungsbolzen 256 mit dem beweglichen Rahmen 25 beweglich verbunden. Dadurch ist das starre Rahmenmodul 24A, wie zuvor in Bezug auf Fig. 10 und Fig. 11 erläutert, über die Führungsbolzen 256 an dem beweglichen Rahmen 25 schwimmend gelagert. Der Bauteilgreifer 257 greift das Bauteil 4, welches zudem auf einer Unterlage 5, beispielsweise einem Falzbett, aufliegt. Die in Fig. 12 gezeigte Stellung entspricht einer ersten Endstellung der Führungsbolzen 256 und damit der zweiten Behandlungseinrichtung 22. Die erste Endstellung entspricht der Ruhestellung oder Nicht-Arbeitsstellung der zweiten Behandlungseinrichtung 22. Durch das Druckstück 256A wird die in Fig. 12 gezeigte Stellung von starrem zu beweglichen Rahmen 24, 25 eingestellt.

Demzufolge bilden der starre Rahmen 24 und die zweite Behandlungseinrichtung 22 als Niederhalter eine starre Einheit. Die Führungsbolzen 256 verbinden die Rahmen 24, 25 beweglich. Anders ausgedrückt, die Führungsbolzen 256 ist an den Rahmen 24, 25 beweglich befestigt. Hierbei realisieren die Führungsbolzen 256 ein Spiel von beispielsweise ca. 5mm, das in Fig. 12 und Fig. 13 als Hub H eingezeichnet ist. Durch die Schwerkraft hängen die Führungsbolzen 256 mit einem Abstand entsprechend dem Hub H unterhalb des starren Rahmenmoduls 24A. Der Abstand zwischen dem starren Rahmenmodul 24A und den Führungsbolzen 256 entspricht dem Abstand zwischen dem Bauteil 4, das beispielsweise das Innenblech einer Fahrzeugtür, usw. sein kann, und der zweiten Behandlungseinrichtung 22 als Niederhalter. In dieser Position wird das Bauteil 4 aufgenommen und transportiert. Die zweite Behandlungseinrichtung 22 als Niederhalter liegt dabei nicht auf dem Bauteil 4 auf.

Der Abstand entsprechend dem Hub H zwischen den Führungsbolzen 256 und erstem Rahmenmodul 24A bzw. der zweiten Behandlungseinrichtung 22 als Niederhalter und dem Bauteil 4 bleibt unverändert, bis das Bauteil 4 beim Einlegen in die Vorrichtung 20 an der Unterlage 5 bzw. einem weiteren Bauteil 4, wie beispielweise einem Außenblech einer Fahrzeugtür, anliegt, insbesondere aufliegt. In diesem Fall bleiben, von der Vorrichtung 20 aus gesehen, die Führungsbolzen 256 und das Bauteil 4 als Innenblech in dieser Position stehen. Als Folge davon wird der Abstand in Form des Hubs H zwischen dem Bauteil 4 und dem starren Rahmenmodul 24A mit der starr angebundenen zweiten Behandlungseinrichtung 22 als Niederhalter geringer. Anders ausgedrückt, das starre Rahmenmodul 24A und damit der starre Rahmen 24 und die zweite Behandlungseinrichtung 22 bewegen sich auf das Bauteil 4 zu, bis die zweite Behandlungseinrichtung 22 als Niederhalter auf das Bauteil 4 drückt. In diesem Zustand ist der Abstand, also der Hub H zwischen den Führungsbolzen 256 und dem starren Rahmen 24A, dann ebenfalls Omm.

In anderen Worten, bewegt sich die Bewegungsvorrichtung 10 nun auf die Vorrichtung 20 in Richtung auf die Unterlage 5 zu, wie in Fig. 12 durch den Pfeil HR gezeigt, wird die zweite Behandlungseinrichtung 22 um den Hub H gegenüber ihrer Stellung bzw. Anordnung in Fig. 12 abgesenkt. Daraus ergibt sich dann die Stellung der zweiten Behandlungseinrichtung 22, die in Fig. 13 gezeigt ist, bei welcher die zweite Behandlungseinrichtung 22 das Bauteil 4 auf der Unterlage 5 kontaktiert und behandeln kann. In dieser Stellung ist der Hub H auf Null reduziert. Somit entspricht die in Fig. 13 gezeigte Stellung der zweiten Behandlungseinrichtung 22 der Arbeitsstellung der zweiten Behandlungseinrichtung 22. Die in Fig. 13 gezeigte Stellung entspricht einer zweiten Endstellung der Führungsbolzen 256 und damit der zweiten Behandlungseinrichtung 22.

Bei der hier gezeigten Ausführungsform der zweiten Behandlungseinrichtung 22 kann die zweite Behandlungseinrichtung 22 das Bauteil 4 niederhalten, so dass das Bauteil 4 zum Laserschweißen jedoch auch für alle anderen Fügetechniken sicher positioniert und so gehalten ist, dass der Kontakt beider Bauteile 4 ohne Spalt sichergestellt ist.

Ganz allgemein führt die Vorrichtung 20 zur Behandlung eines Bauteils 4 in Zusammenwirkung mit der Bewegungsvorrichtung 10 das folgende Verfahren aus. Ist die Vorrichtung 20 mit der Bewegungsvorrichtung 10 über entsprechende Koppelelemente 23, 11 zur Kopplung der Vorrichtung 20 so gekoppelt, dass die Bewegungsvorrichtung 10 die Vorrichtung 20 im Raum bewegen kann, kann der bewegliche Rahmen 25 der Vorrichtung 20 relativ zu ihrem starren Rahmen 24 bewegt werden, um eine über die Koppelelemente 23 und den beweglichen Rahmen 25 vermittelte Bewegung der Bewegungsvorrichtung 10 in eine mit der Behandlungseinrichtung 21, 22 ausgeführte Bewegung zur Behandlung des Bauteils 4 umzusetzen. Die weiteren Verfahrensschritte zum Greifen und Positionieren eines oder mehrerer Bauteil(e) 4 sind zuvor beschrieben.

Fig. 14 zeigt die Vorrichtung 20, welche an der zweiten Behandlungseinrichtung 22 ein Bauteil 4, das hier eine Fahrzeugtür eines Kraftfahrzeugs ist, greift und trägt. Zudem ist an der ersten Behandlungseinrichtung 21 ein weiteres Bauteil 4 mit den Halteelementen 26 (Fig. 3, Fig. 4) gehalten. Das weitere Bauteil 4 kann der untere Teil einer Fahrzeugtür eines Kraftfahrzeugs sein, welches beispielsweise rahmenlose Fenster hat.

Zusammengefasst wird bei der Vorrichtung 20 durch gekoppelte Linearführungen und entsprechende Klemmfunktion inklusive kulissengeführte formschlüssige Verriegelung mit der Verriegelung 255 die Arretierung des Bauteils 4 an der Vorrichtung 20 und anschließend gegebenenfalls auf der Unterlage 5 positioniert und definiert. Hierbei wird die Linearverschiebung des beweglichen Rahmens 25 bzw. seiner Elemente 215, 216, 256 mit den Führungssäulen 251 umgesetzt. Somit erfolgt die geführte Bewegungs- und Klemmfunktion durch geradlinig geführte Bewegung. Anders ausgedrückt, bei der Automatisierungsanlage 1 ist eine über das Koppelelement 23 und den beweglichen Rahmen 25 vermittelte Bewegung der Bewegungsvorrichtung 10 eine translatorische Bewegung in zumindest einer Richtung im Raum.

Daher kann das Zusammenwirken der Bewegungsvorrichtung 10 mit dem Funktionsmechanismus der Vorrichtung 20 einzelne Verriegelungseinheiten ersetzen.

Gemäß einer Modifikation des ersten Ausführungsbeispiels kann auch am Rahmenmodul 24A, anstelle einer zweiten Behandlungseinrichtung 22, eine erste Behandlungseinrichtung 21 vorhanden sei. In diesem Fall wäre die Vorrichtung 20 auf beiden entgegengesetzt zueinander angeordneten Seiten mit einer ersten Behandlungseinrichtung 21 bestückt. Der hierfür erforderliche Umbau der Vorrichtung 20 kann durch lösbare Verbindungen am starren Rahmen 24 leicht vorgenommen werden. Zudem sind hierfür die erste und zweite Behandlungseinrichtung 21, 22 vorzugsweise derart ausgestaltet, dass entweder die erste Behandlungseinrichtung 21 oder die zweite Behandlungseinrichtung 22 an dem Rahmenmodul 24A montiert werden kann. In diesem Fall können die Führungen 245 im Rahmenmodul 24A entweder für die erste oder zweite Behandlungseinrichtung 21, 22 Verwendung finden. Es ist lediglich auch am Rahmenmodul 24A eine Öffnung 244 für das Befestigungselement 214 der ersten Behandlungseinrichtung 21 vorzusehen, wie in Fig. 5 gezeigt.

Gemäß einer weiteren Modifikation des ersten Ausführungsbeispiels kann auch am Rahmenmodul 24B, anstelle einer ersten Behandlungseinrichtung 21, eine zweite Behandlungseinrichtung 22 vorhanden sei. In diesem Fall wäre die Vorrichtung 20 auf beiden entgegengesetzt zueinander angeordneten Seiten mit einer zweiten Behandlungseinrichtung 22 bestückt. Zudem sind auch hierfür die erste und zweite Behandlungseinrichtung 21, 22 vorzugsweise derart ausgestaltet, dass entweder die erste Behandlungseinrichtung 21 oder die zweite Behandlungseinrichtung 22 an dem Rahmenmodul 24B montiert werden kann. In diesem Fall können die Führungen 245 im Rahmenmodul 24B entweder für die erste oder zweite Behandlungseinrichtung 21, 22 Verwendung finden.

Fig. 15 und Fig. 16 zeigen eine Vorrichtung 200 gemäß einem zweiten Ausführungsbeispiel. Hierbei zeigt Fig. 15 die Ruhestellung oder Nicht-Arbeitsstellung, in welcher die erste Behandlungseinrichtung 21 in die Vorrichtung 20 eingefahren ist. Dagegen zeigt Fig. 16 die Arbeitsstellung, in welcher die erste Behandlungseinrichtung 21 aus der Vorrichtung 20 ausgefahren ist. Bei diesem Ausführungsbeispiel ist der starre Rahmen 24 geteilt. Hierbei ist das Rahmenmodul 24A von den ihm zugewandten Stirnseiten der Rahmenmodulverbinder 24C gelöst, so dass nur noch die erste Behandlungseinrichtung 21 an der Vorrichtung 200 vorgesehen ist. Ansonsten ist die Vorrichtung 200 auf die gleiche Weise aufgebaut, wie in Bezug auf die Vorrichtung 20 beim ersten Ausführungsbeispiel beschrieben.

Bei einer Modifikation des vorliegenden Ausführungsbeispiels kann jedoch auch das Koppelelement 23 von dem beweglichen Rahmen 25 aufgrund einer lösbaren Verbindung abgenommen werden. Das Koppelelement 23 kann dann an dem beweglichen Rahmen 25 anstelle des Rahmenmoduls 24A bei den Stirnseiten der Rahmenmodulverbinder 24C an dem beweglichen Rahmen 25 angeordnet werden. Somit wäre das Koppelelement 23 im Vergleich zu der Vorrichtung 200 nicht mehr an der Schmalseite der Vorrichtung 200 sondern an einer quer dazu angeordneten Seite der Vorrichtung 200 angeordnet.

Gemäß einem dritten Ausführungsbeispiel ist der starre Rahmen 24 der Vorrichtung 20 derart geteilt, dass nur noch die zweite Behandlungseinrichtung 21 an der Vorrichtung 20 vorgesehen ist. Ansonsten ist die Vorrichtung gemäß dem vorliegenden Ausführungsbeispiel auf die gleiche Weise aufgebaut, wie in Bezug auf die Vorrichtung 20 beim ersten Ausführungsbeispiel beschrieben.

Bei einer Modifikation des vorliegenden Ausführungsbeispiels ist das Koppelelement 23 an dem beweglichen Rahmen 25 anstelle des Rahmenmoduls 24A bei den Stirnseiten der Rahmenmodulverbinder 24C am beweglichen Rahmen angeordnet, wie zuvor in Bezug auf das zweite Ausführungsbeispiel beschrieben.

Alle zuvor beschriebenen Ausgestaltungen der Automatisierungsanlage 1 und der Vorrichtungen 20, 200 können einzeln oder in allen möglichen Kombinationen Verwendung finden. Insbesondere ist eine beliebige Kombination oder Austausch der Merkmale der Ausführungsbeispiele möglich. Bei Bedarf können Merkmale der Ausführungsbeispiele auch entfallen, soweit die beschriebenen Funktionen gewährleistet sind. Zusätzlich sind insbesondere folgende Modifikationen denkbar.

Die in den Figuren dargestellten Teile sind schematisch dargestellt und können in der genauen Ausgestaltung von den in den Figuren gezeigten Formen abweichen, solange deren zuvor beschriebenen Funktionen gewährleistet sind.

Die Form der Vorrichtungen 20, 200 ist beliebig wählbar, solange deren zuvor beschriebene Funktion gewährleistet ist.

An den Vorrichtungen 20, 200 können auch andere Behandlungseinrichtungen als die erste und zweite Behandlungseinrichtung 21, 22 montiert sein.

Wie zuvor beschrieben, kann bei der Automatisierungsanlage 1 eine über das Koppelelement 23 und den beweglichen Rahmen 25 und dann den starren Rahmen 24 vermittelte Bewegung der Bewegungsvorrichtung 10 eine translatorische Bewegung in zumindest einer Richtung im Raum sein. Zusätzlich oder alternativ dazu sind auch jede andere Form von überlagerten oder gekoppelten Bewegungen der Bewegungsvorrichtung 10 möglich, um die über das Koppelelement 23 und den beweglichen Rahmen 25 und starren Rahmen 24 vermittelte Bewegung der Bewegungsvorrichtung 10 zur Behandlung eines oder mehrerer Bauteil(e) 4 auszuführen. Insbesondere kann es sich um eine L-förmige Bewegung, eine mit einer Drehbewegung überlagerte oder gekoppelte Bewegung, usw. handeln.

## Patentansprüche

1. Vorrichtung (20; 200) zum ein- oder doppelseitigen positionierten Aufnehmen von Bauteilen (4) zur Kombination von Bauteilbehandlungen, mit
einem Koppelelement (23) zur Kopplung der Vorrichtung (20; 200) mit einer Bewegungsvorrichtung (10), um die Vorrichtung (20; 200) mit der Bewegungsvorrichtung (10) im Raum zu bewegen,
einem starren Rahmen (24) zur Aufnahme einer Behandlungseinrichtung (21, 22) zur Behandlung des Bauteils (4), und
einem beweglichen Rahmen (25) zur Aufnahme des Koppelelements (23),
wobei der bewegliche Rahmen (25) relativ zum starren Rahmen (24) bewegbar ausgestaltet ist, um eine über das Koppelelement (23) und den beweglichen Rahmen (25) vermittelte Bewegung der Bewegungsvorrichtung (10) in eine mit der Behandlungseinrichtung (21, 22) ausgeführte Bewegung zur Behandlung des Bauteils (4) umzusetzen.

2. Vorrichtung (20; 200) nach Anspruch 1, wobei der bewegliche Rahmen (25) eine Kulissenführung (253; 254) aufweist zur Führung der Behandlungseinrichtung (21) entlang einer vorbestimmten Bahn, wenn eine über das Koppelelement (23) und den beweglichen Rahmen (25) vermittelte Bewegung der Bewegungsvorrichtung (10) eine Bewegung zur Behandlung des Bauteils (4) mit der Behandlungseinrichtung (21, 22) zur Folge hat.

3. Vorrichtung (20; 200) nach Anspruch 1 oder 2, wobei die Vorrichtung (20; 200) für eine translatorische Bewegung oder eine L-formige Bewegung oder eine mit einer Drehbewegung überlagerte oder gekoppelte Bewegung der Bewegungsvorrichtung (10) ausgestaltet ist.

4. Vorrichtung (20; 200) nach einem der vorangehenden Ansprüche,
wobei der bewegliche Rahmen (25) mittels mindestens einen Führungsbolzens (256) und eines Bauteilgreifers (257) zur schwimmenden Aufnahme der Behandlungseinrichtung (22) mit oder ohne Bauteil (4) ausgestaltet ist, und/oder
wobei der starre Rahmen (24) und der bewegliche Rahmen (25) mit Verriegelungselementen (27, 258) aneinander verriegelbar sind.

5. Vorrichtung (20; 200) nach einem der vorangehenden Ansprüche,
wobei der bewegliche Rahmen (25) zur Aufnahme mindestens eines Elements (215; 216; 256) ausgestaltet ist, welches jeweils zwischen einer ersten und einer zweiten Endstellung hin und her bewegbar ist,
wobei die erste Endstellung einer Nicht-Arbeitsstellung entspricht, in welcher die Vorrichtung (20; 200) keine Behandlung des Bauteils (4) mit der Behandlungseinrichtung (21; 22) ausführt, jedoch das Bauteil (4) aufgenommen oder abgelegt werden kann, und
wobei die zweite Endstellung einer Arbeitsstellung entspricht, in welcher das Bauteil (4) mit der Behandlungseinrichtung (21; 22) behandelbar ist.

6. Vorrichtung (20; 200) nach Anspruch 4 oder 5, zudem mit einem Verriegelungselement (255) zur Verriegelung der ersten Behandlungseinrichtung (21) in der Arbeitsstellung.

7. Vorrichtung (20; 200) nach einem der vorangehenden Ansprüche, wobei der starre Rahmen (24) zur Aufnahme einer Behandlungseinrichtung (21) zur Rollfalzbearbeitung oder zur Aufnahme einer Behandlungseinrichtung (22) für Laserschweißen ausgestaltet ist.

8. Vorrichtung (20; 200) nach einem der vorangehenden Ansprüche,
wobei der starre Rahmen (24) eine erste und eine zweite Seite aufweist, die entgegengesetzt zueinander an dem starren Rahmen (24) angeordnet sind, und
wobei an mindestens einer der ersten und zweiten Seite Führungen (245) angeordnet sind zur Aufnahme einer Behandlungseinrichtung (21) zur Rollfalzbearbeitung oder zur Aufnahme einer Behandlungseinrichtung (22) zum Laserschweißen.

9. Vorrichtung (20; 200) nach einem der vorangehenden Ansprüche,
wobei der starre Rahmen (24) eine dritte Seite aufweist, welche quer zu der ersten und zweiten Seite angeordnet ist, und
wobei das Koppelelement (23) entweder an der dritten Seite oder an einer der ersten und zweiten Seite angeordnet ist.

10. Vorrichtung (20; 200) nach einem der Ansprüche 8 oder 9, wobei das Koppelelement (23) derart ausgestaltet ist, dass die Bewegungsvorrichtung (10) die Vorrichtung (20; 200) im Raum derart bewegen kann, dass je nach Bedarf die erste über der zweiten Seite oder die zweite über der ersten Seite angeordnet ist.

11. Vorrichtung (20; 200) nach einem der vorangehenden Ansprüche,
wobei der starre Rahmen (24) zwei Rahmenmodule (24A, 24B) aufweist, welche lösbar voneinander angeordnet sind, so dass die Vorrichtung (20; 200) bei voneinander gelösten Rahmenmodulen (24A, 24B) zum einseitigen positionierten Aufnehmen von Bauteilen (4) zur Kombination von Bauteilbehandlungen und bei miteinander verbundenen Rahmenmodulen (24A, 24B) zum doppelseitigen positionierten Aufnehmen von Bauteilen (4) zur Kombination von Bauteilbehandlungen ausgestaltet ist, und/oder
wobei der bewegliche Rahmen (25) in dem starren Rahmen (24) angeordnet ist.

12. Automatisierungsanlage (1) zur Behandlung eines Gegenstands (2), mit mindestens einer Vorrichtung (20; 200) nach einem der vorangehenden Ansprüche, und mindestens einer Bewegungsvorrichtung (10) zur Bewegung der Vorrichtung (20; 200) im Raum.

13. Automatisierungsanlage (1) nach Anspruch 11, wobei eine über das Koppelelement (23) und den beweglichen Rahmen (25) vermittelte Bewegung der Bewegungsvorrichtung (10) eine translatorische Bewegung in zumindest einer Richtung im Raum oder eine L-förmige Bewegung oder eine mit einer Drehbewegung überlagerte oder gekoppelte Bewegung ist.

14. Verfahren zum ein- oder doppelseitigen positionierten Aufnehmen von Bauteilen (4) zur Kombination von Bauteilbehandlungen mit einer Vorrichtung (20; 200), die ein Koppelelement (23) zur Kopplung der Vorrichtung (20; 200) mit einer Bewegungsvorrichtung (10), um die Vorrichtung (20; 200) mit der Bewegungsvorrichtung (10) im Raum zu bewegen, einen starren Rahmen (24) zur Aufnahme einer Behandlungseinrichtung (21, 22) zur Behandlung des Bauteils (4), und einen beweglichen Rahmen (25) zur Aufnahme des Koppelelements (23) aufweist, wobei bei dem Verfahren der bewegliche Rahmen (25) relativ zum starren Rahmen (24) bewegt wird, um eine über das Koppelelement (23) und den beweglichen Rahmen (25) vermittelte Bewegung der Bewegungsvorrichtung (10) in eine mit der Behandlungseinrichtung (21, 22) ausgeführte Bewegung zur Behandlung des Bauteils (4) umzusetzen.
